# EUROPÄISCHE PATENTANMELDUNG

(11) **EP 4 293 433 A1**
(43) Veröffentlichungstag der Anmeldung: **20.12.2023**
(21) Anmeldenummer: 22179211.2
(22) Anmeldetag: 15.06.2022
(51) Int. Cl.: G05B 13/02, G06N 3/08, G05B 19/418

(54) **KONTINUIERLICHES ANPASSEN EINER BEWERTUNGSFUNKTION**

(71) Anmelder: Siemens Aktiengesellschaft, 80333 München (DE)
(72) Erfinder: Schmid, Reiner, 80538 München (DE)
(74) Vertreter: Siemens Patent Attorneys

(57) **Zusammenfassung**

Die Erfindung betrifft ein Verfahren zum Steuern (S6) einer Produktionsanlage in Abhängigkeit einer Bewertung eines maschinellen Lernalgorithmus,
mit den Schritten:
- Ein Abrufen (S1) einer ersten Bewertungsfunktion (1) des maschinellen Lernalgorithmus, wobei die erste Bewertungsfunktion (1) mit ersten Situationsdaten (3) trainiert wurde,
- ein Abrufen (S2) von zweiten Situationsdaten (4) aus einer Produktionsanlage, wobei die zweiten Situationsdaten (4) physikalische Messwerte der Produktionsanlage umfassen,
- ein Bestimmen (S3) eines epistemischen Unsicherheitswertes, wobei der epistemische Unsicherheitswert angibt, inwieweit die ersten Situationsdaten (3) die zweiten Situationsdaten (4) abdecken,
- ein Erstellen (S4) einer zweite Bewertungsfunktion (2) durch ein Trainieren (S4a) der ersten Bewertungsfunktion (1) mit zumindest einem Teil (41) der zweiten Situationsdaten (4), wobei der Teil (41) der zweiten Situationsdaten (4) in Abhängigkeit des epistemischen Unsicherheitswerts (6) in das Trainieren (S4a) einbezogen wird,
- ein Ausgeben (S5) einer Bewertung bezüglich dritter Situationsdaten (5) durch die zweite Bewertungsfunktion (2), wobei die dritten Situationsdaten (5) physikalische Messwerte der Produktionsanlage umfassen, und
- das Steuern (S6) der Produktionsanlage in Abhängigkeit der Bewertung.

Außerdem betrifft die Erfindung eine Produktionssteuerung, ein Computerprogrammprodukt und ein computerlesbares Medium.

## Beschreibung

### HINTERGRUND DER ERFINDUNG

### Gebiet der Erfindung

Die vorliegende Erfindung betrifft ein Verfahren zum Steuern einer Produktionsanlage in Abhängigkeit einer Bewertung eines maschinellen Lernalgorithmus. Die Erfindung betrifft außerdem eine zugehörige Produktionssteuerung, ein Computerprogrammprodukt und ein computerlesbares Medium.

### Beschreibung des Stands der Technik

Verfahren, die auf der Anwendung von künstlicher Intelligenz (KI) basieren, werden insbesondere in der Qualitätsprüfung der Produktion eingesetzt, um durch automatische Analyse von Situationsdaten die Qualitätskontrollen zu automatisieren. Situationsdaten umfassen Bildern und/oder anderer Produktionsdaten. Produktionsdaten sind insbesondere eine Summe an Messwerten, insbesondere Temperatur, Bauteilabmessungen, Umgebungsbedingungen, physikalische Größen und/oder Ausschusswerte, welche bei der Produktion auftreten.

Es wird anhand einer Bildaufnahme des Produktes beurteilt, ob das Produkt hinsichtlich bestimmter Merkmale innerhalb der Spezifikation liegt, oder ob ein Fehler vorliegt, der zum Verwerfen oder einer notwendigen Nachbearbeitung führt. In ähnlicher Weise kann aus der Analyse von Produktionsdaten oder von einer Kombination aus Bildaufnahmen und Produktionsdaten abgelesen werden, ob Mängel bei Ablauf der Produktion eingetreten sind.

Die Anforderungen an solche KI-basierten Systeme verlangen, dass sie mit einer hohen Genauigkeit Abweichungen erkennen (hohe Präzision, "high precision"), gleichzeitig aber auch fälschlicherweise als Mangel identifizierte Situationen minimiert werden (geringe Rate an falsch positiven/ "false positives"). "False positives" können durch den erhöhten Aufwand einer Kontrolle den Durchsatz der Produktion entscheidend beeinträchtigen.

Die Güte solcher KI-basierten Systemen basiert neben der verwendeten Machine Learning (ML)-Technik ("Architektur") auf den zum Trainieren verwendeten Daten. Diese sind beschränkt in der Verfügbarkeit, da eine aufwendige Analyse zur Aufbereitung (u.a. Labeling oder Zuweisen der Ground Truth) erforderlich ist, damit diese in ML-Verfahren eingesetzt werden können.

Daher sollte eine Erweiterung des Datensatzes, mit dem ein Training der KI erfolgt nicht nach Belieben erfolgen, sondern es ist eine Entscheidung darüber notwendig, für welche Situationen, insbesondere für welche konkreten Bildaufnahmen und/oder Produktionsbedingungen, die Erweiterung des Datensatzes erforderlich ist, da die bisherigen Daten, welche zum Training verwendet wurden, mögliche Situationen noch nicht umfassend genug abbilden oder enthalten.

Weiterhin ist das im solchen Trainingssituationen verarbeitbare maximale Datensatz begrenzt, da Ressourcen dafür nicht unbegrenzt zur Verfügung stehen bzw. mit Kosten verbunden sind. Auch deshalb sollte die Erweiterung des Datensatzes, mit dem ein Training der KI erfolgt nicht nach Belieben erfolgen.

Aktuell wird das Problem gelöst, indem eine manuelle Bewertung von Situationen, insbesondere Bilder und/oder Messwerten, entweder anlassgetrieben oder aufgrund der Analyse der Bewertungsqualität der KI-basierten Funktion durch Experten für den Fertigungsprozess erfolgt. Dies ist sehr aufwändig und bringt in vielen Fällen keinen Erfolg einer tatsächlichen Verbesserung der Bewertungsfunktion. Danach wird die KI-Funktion neu trainiert und im System getestet.

Die Aufgabe der Erfindung besteht darin, eine verbesserte, insbesondere automatisierte, Lösung für ein Verbessern der Bewertungsfunktion von maschinellen Lernverfahren bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Steuern einer Produktionsanlage in Abhängigkeit einer Bewertung eines maschinellen Lernalgorithmus,
mit den Schritten:
- Ein Abrufen einer ersten Bewertungsfunktion des maschinellen Lernalgorithmus, wobei die erste Bewertungsfunktion mit ersten Situationsdaten trainiert wurde,
- ein Abrufen von zweiten Situationsdaten aus einer Produktionsanlage, wobei die zweiten Situationsdaten physikalische Messwerte der Produktionsanlage umfassen,
- ein Bestimmen eines epistemischen Unsicherheitswertes, wobei der epistemische Unsicherheitswert angibt, inwieweit die ersten Situationsdaten die zweiten Situationsdaten abdecken,
- ein Erstellen einer zweiten Bewertungsfunktion durch ein Trainieren der ersten Bewertungsfunktion mit zumindest einem Teil der zweiten Situationsdaten, wobei der Teil der zweiten Situationsdaten in Abhängigkeit des epistemischen Unsicherheitswerts in das Trainieren einbezogen wird,
- ein Ausgeben einer Bewertung bezüglich dritter Situationsdaten durch die zweite Bewertungsfunktion, wobei die dritten Situationsdaten physikalische Messwerte der Produktionsanlage umfassen, und
- das Steuern der Produktionsanlage in Abhängigkeit der Bewertung.

Der epistemischen Unsicherheitswert gibt an, inwieweit die zweiten Situationsdaten bereits durch ersten Situationsdaten abgedeckt sind. Bei einer hohen Abdeckung würde ein Training und/oder Testen der Bewertungsfunktion von der Einbeziehung dieser Situationsdaten nicht mehr profitieren und eine Verbesserung der Bewertungsfunktion würde nicht mehr oder nur in sehr geringem Umfang erreicht werden. Der epistemischen Unsicherheitswert ist somit ein Maß darüber, wie wahrscheinlich ist es, dass die Situation bereits repräsentiert ist, eine Einschätzung inwieweit die Situation dem maschinellen Lernalgorithmus vertraut ist und dadurch ein indirekter Wert den Kandidaten genauer zu untersuchen.

Die dritten Situationsdaten sind unbekannte weitere Situationen, an welchen insbesondere noch kein Trainieren oder Testen vorgenommen wurde.

Durch das Steuern der Produktionsanlage kann das Verfahren insbesondere Verwendung in der Produktion, insbesondere Qualitätskontrolle und-steuerung, finden.

Bei dem Erstellen der zweiten Bewertungsfunktion wird für den Teil der zweiten Situationsdaten, die in Abhängigkeit des epistemischen Unsicherheitswerts in das Trainieren einbezogen werden sollen, insbesondere eine Situationsanalyse durchgeführt, bei der der "Ground Truth" (also die anzunehmende Wahrheit, auch als die real vorliegende Situation bezeichenbar) anhand zuverlässiger Methoden bestimmt wird und den Daten als Label oder Kategorie zugeordnet wird. Diese Methoden können auf exakten mathematischen Analysen der erfassten Sensordaten eventuell unter Hinzuziehung weitere Daten automatisch gewonnen werden, stehen aber aufgrund der erhöhten Analysezeit und des Ressourcenverbrauchs für eine Real-Time Verwendung in der Qualitätskontrolle nicht zur Verfügung. Diese können daher gleichfalls auch nicht für alle KI-Bewertungssituationen durchgeführt werden. Kann für den Analysekandidaten der Ground-Truth bestimmt werden, wird der Datensatz in den Trainings/bzw. Testdatenpool aufgenommen und steht für das KI-Funktionstraining zur Verfügung.

Ein Aspekt der Erfindung besteht darin, ein Verfahren bereitzustellen, das ermöglicht eine kontinuierliche Verbesserung der Qualitätsbeurteilungsfunktion, insbesondere ein Erreichen einer höheren Präzision und/oder einer niedrigeren Falsch-Positiv-Rate zu erreichen, wobei das Verfahren automatisch Situationen anhand der jeweiligen Situationsdaten danach beurteilt, ob ihre Einbeziehung in das Training der Bewertungsfunktion, auch als KI-Funktion bezeichenbar, nutzbringend ist, eine automatische Aufarbeitung, insbesondere ein Labelling der Situationen unter Einbezug der grundlegenden Wahrheit/"Ground Truth", im Sinne der Analyse der Situation durchführt und den Satz der Trainingsdaten für die Updates der Bewertungsfunktion selektiert und eine Re-Training der ersten Bewertungsfunktion durchführt, wodurch die zweite Bewertungsfunktion erstellt wird.

Anders ausgedrückt wird die KI-Funktion mit einer Identifikation von Situationen ausgestattet, die Potential für eine Verbesserung des Trainingsdatenpools und des Testdatenpools haben, um eine kontinuierliche Verbesserung der Bewertungsfunktion/KI-Bewertungsfunktion zu erreichen, deren Performance hinsichtlich der KPIs (z.B. Precision und Recall) die für Effizienz der Produktion und Qualitätskontrolle entscheidend sind.

Zur Bestimmung der Kandidaten unter den Situationsdaten für den Datenpool zur Verbesserung der Trainingsdaten und Testdaten wird dabei eine Bewertungsfunktion/KI-Funktion ("Architektur") verwendet, die eine Bestimmung der Unsicherheit bei der Einschätzung der Situation erlaubt ("epistemische Uncertainty"). Dafür können gängige Verfahren der KI angewendet werden, wie beispielsweise Ensemble-Methoden oder Monte-Carlo Dropout verwendet werden. Aufgrund dieser Methoden, die für geeignete KI-Architekturen verwendbar sind, kann ermittelt werden, ob die betrachtete Situation durch die Trainingsdaten bereits gut erfasst worden ist, oder ob es eine Situation ist, bei der das Training/Test der Bewertungsfunktion von der Einbeziehung dieser Situationsdaten profitieren und eine Verbesserung erreicht werden kann.

Die Verwendung einer KI-Bewertungsfunktion mit Bestimmung der Unsicherheit gemäß den angegebenen Verfahren hat den Vorteil einer kontinuierlichen Bestimmung von Situationen während des normalen Produktionsbetriebs, die durch die bereits vorhandenen Lerndaten für die KI-Bewertungsfunktion nicht gut erfasst worden sind.

Damit wird ein Verfahren ermöglicht, dass eine kontinuierliche Verbesserung der Bewertungsentscheidungen der KI-Bewertungsfunktion erlaubt und damit die Effizienz des Qualitätskontrollsystems erhöht. Im Gegensatz zu anderen denkbaren Lösungen kann dabei eine Beschränkung auf Situationen erfolgen, bei denen aufgrund der Unsicherheitsbewertung die fundierte Vermutung besteht, dass die Einbeziehung dieser Situation die Performance der Bewertungsfunktion verbessern kann. Das ist entscheidend, weil die Situationsanalyse äußerst ressourcenintensiv (Zeitaufwändig, Rechenressource) sein kann.

Die Verwendung eines Konfidenzwertes, welcher regelmäßig bei KI-Architekturen zur Klassifikation ermittelt wird, reicht dazu nicht aus, da dieser keine Information über die Ähnlichkeit der jeweiligen Situation mit den Trainingsdaten ausdrückt. Es ist die Verwendung gezielter Methoden zur Bestimmung der "Uncertainty" im Sinne der epistemischen Unsicherheit erforderlich.

In einer Weiterbildung der Erfindung weist das Verfahren den weiteren Schritt auf:
- Ein Erstellen einer Rangfolge in Abhängigkeit des epistemischen Unsicherheitswerts der zweiten Situationsdaten,
   wobei bei dem Trainieren der ersten Bewertungsfunktion mit zumindest einem Teil der zweiten Situationsdaten, der Teil der zweiten Situationsdaten außerdem in Abhängigkeit der Rangfolge in das Trainieren einbezogen wird.

Das Erstellen der Rangfolge ist auch als ein Erstellen einer Priorisierung bezeichenbar. Die Analysekandidaten/Situationsdaten werden für eine Situationsanalyse priorisiert. Je höher Situationsdaten priorisiert sind bzw. in der Rangfolge eingeordnet sind, desto höher ist der erwartete positive Effekt eines Einbezuges der Daten in das Trainieren.

In einer weiteren Weiterbildung der Erfindung erfolgt das Erstellen der Rangfolge der zweiten Situationsdaten außerdem in Abhängigkeit von:
- einer zuvor von der ersten Bewertungsfunktion getroffenen falsch-positiven Entscheidung und/oder
- einer zuvor von der ersten Bewertungsfunktion getroffenen falsch-negativen Entscheidung.

Die Priorisierung kann dadurch neben dem Unsicherheitswert, der mittels der oben beschriebenen Methoden ermittelt worden ist, auch weitere Kriterien einbeziehen: beispielsweise ob die Bewertungsfunktion ein "false positve" oder eine "false negative" Entscheidung getroffen hat. Die Information kann beispielsweise aus späteren Schritten der Fertigung gewonnen werden. Da diese Information erst zeitverzögert zur Verfügung steht werden Analysekandidaten eine bestimmte Zeit in einem Puffer zwischengespeichert und ihre Priorität entsprechend angepasst.

Zusätzlich wird insbesondere eine Unsicherheit, auch als "Uncertainty"-Wert bezeichenbar, des maschinellen Lernalgorithmus bzgl. der falsch getroffenen Entscheidung in das Erstellen der Rangfolge einbezogen.

In einer weiteren Weiterbildung der Erfindung weist das Verfahren den weiteren Schritt auf:
- Ein Abrufen eines Schwellwertes, wobei der Schwellwert eine Schwelle für den epistemischen Unsicherheitswert angibt,
   wobei bei dem Trainieren der ersten Bewertungsfunktion mit zumindest einem Teil der zweiten Situationsdaten, der Teil der zweiten Situationsdaten außerdem in Abhängigkeit der Schwelle in das Trainieren einbezogen wird.

Dabei werden jene zweiten Situationsdaten, welche den Schwellwert überschreiten, in ein weiteres Training einbezogen. Grundlage für diese Entscheidung sind geeignet gewählte Schwellwerte für sich aus den Methoden ergebenden Unsicherheitswerten der Situation. Ob ein Fertigungsmangel vorliegt, ist für diese Entscheidung der Identifikation der Analysekandidaten nicht entscheidend.

In einer weiteren Weiterbildung der Erfindung umfasst das Steuern der Produktionsanlage:
- Ein Unterbrechen eines Fertigungs- oder Produktionsprozesses und/oder
- ein Durchführen eines weiteren Produktionsschritts und/oder
- ein Weglassen eines weiteren Produktionsschritts und/oder
- ein Warten der Produktionsanlage und/oder
- eine Ausgabe einer Fehlermeldung und/oder
- ein Aussortieren eines Bauteils und/oder
- ein Beheben eines Mangels.

Das Verfahren hat den Vorteil, dass durch die verbesserte Bewertungsfunktion und die genannten Reaktionen eine verbesserte Steuerung hinsichtlich verschiedener Aspekte erfolgen kann.

In einer weiteren Weiterbildung der Erfindung sind die physikalischen Messwerte als:
- Produktionsdaten und/oder
- Temperatur und/oder
- Vibration und/oder
- Feuchtigkeit und/oder
- Bauteilabmessungen und/oder
- Umgebungsbedingungen und/oder
- Fertigungsausschusswerte und/oder
- Bilddaten
ausgebildet.

Die ersten Situationsdaten sind insbesondere ebenfalls als die genannten physikalischen Messwerte ausgebildet. Somit umfassen die ersten Situationsdaten, zweiten Situationsdaten und dritten Situationsdaten physikalische Messwerte der Produktionsanlage.

In einer weiteren Weiterbildung der Erfindung wurden die physikalischen Messwerte durch:
- mindestens einen Messsensor und/oder
- ein Thermometer und/oder
- eine Kamera
erfasst.

In einer weiteren Weiterbildung der Erfindung umfasst die Bewertung durch die zweite Bewertungsfunktion:
- eine Fertigungsqualität und/oder
- ein Einhalten eines Toleranzwert.

Jene Bewertung kann herangezogen werden, um mit einer entsprechenden Reaktion die Steuerung der Produktionsanlage vorzunehmen.

In einer weiteren Weiterbildung der Erfindung wird der epistemische Unsicherheitswert durch:
- eine Ensemble-Methode und/oder
- einen Monte-Carlo Dropout
bestimmt.

In einer weiteren Weiterbildung der Erfindung weist das Verfahren die weiteren Schritte auf:
- ein Ausgeben einer weiteren Bewertung bezüglich der dritten Situationsdaten durch die erste Bewertungsfunktion und
- ein Vergleichen der Bewertung durch die erste Bewertungsfunktion und der weiteren Bewertung durch die zweite Bewertungsfunktion hinsichtlich einer jeweiligen Abweichung von einer grundlegenden Wahrheit.

Die grundlegende Wahrheit ist auch als "Ground Truth" bezeichenbar. Sie basiert insbesondere auf einer Experten Meinung der real vorliegenden Situation und wird als "tatsächliche" den dritten Situationsdaten zugehörige Bewertung angesehen.

Diese Ausführungsform kann auch als Evaluierung der zweiten Bewertungsfunktion bezeichnet werden. Im Zusammenspiel der angegebenen Merkmale wird zudem erreicht, dass das Update der KI-Funktion zusammen mit einer Absicherung erfolgt, so dass alle Schritte automatisiert erfolgen können und gleichzeitig sichergestellt ist, dass keine Verschlechterung der KI-Bewertungsfunktion im Betrieb auftreten kann.

Das KI-Funktionstraining wird mit dem geupdateten Datensatz zu einem gewählten Zeitpunkt vorgenommen und führt zur Bestimmung eines geupdateten KI-Modells. Anhand der Evaluierung dieses Modell anhand des Testdatenpools wird aufgrund von Schwellwerten der Genauigkeit und anderer festgelegter Parameter entschieden, ob das neue Modell eine Verbesserung im Betriebseinsatz verspricht.

Neue Situationen können in den Trainingsdaten/Testdatenpool auch selektiv aufgenommen werden, so dass mehrere Kandidaten für das Update der KI-Funktion bestimmt werden.

Abschließend kann/können das/die neuen Modell(e) parallel zu KI-Bewertungsfunktion auf Betriebsbewährung getestet werden. Dafür werden die Ergebnisse des alten und des neuen Modells verglichen. Bei Abweichungen wird, wie auf eben beschriebene Art der Ground Truth der Situation ermittelt, und damit eine objektive Bewertungsgrundlage für die neue KI-Bewertungsfunktion geschaffen. Erfüllt das neue Modell die Qualitätsanforderungen an die Bewertungsfunktion besser als das alte Modell wird es für den aktiven Betrieb verwendet.

Basierend auf der Betriebsbewährung der neuen KI-Funktion kann dann zusätzlich noch das Update des Trainingsdatenpools daraufhin bewertet werden, ob ein Vorteil erzielt wurde, und damit eine dauerhafte Aufnahme der Daten sinnvoll ist, oder ob diese, wenn kein Vorteil erzielt worden ist, wieder aus dem Datenpool entfernt werden.

In einer weiteren Weiterbildung der Erfindung erfolgt das Steuern der Produktionsanlage außerdem in Abhängigkeit der weiteren Bewertung. In diesem Fall wird die Bewertung der ersten Bewertungsfunktion weiterhin zum Steuern der Produktionsanlage verwendet. Dies ist insbesondere von Vorteil, wenn die zweite Bewertungsfunktion nicht zu einer Verbesserung geführt hat.

In einer weiteren Weiterbildung der Erfindung erfolgt bei dem Erstellen der zweite Bewertungsfunktion außerdem durch ein Testen mit zumindest einem Teil der zweiten Situationsdaten, wobei der Teil der zweiten Situationsdaten in Abhängigkeit des epistemischen Unsicherheitswerts in das Testen einbezogen wird. Dabei wird eine Vorstufe der finalen zweite Bewertungsfunktion getestet.

Für die erste Bewertungsfunktion werden die ersten Situationsdaten ebenfalls insbesondere für ein Testen verwendet.

Die Erfindung umfasst außerdem eine Produktionssteuerung, ausgebildet zum Steuern einer Produktionsanlage in Abhängigkeit einer Bewertung eines maschinellen Lernalgorithmus, aufweisend:
- einen Prozessor, aufweisend:
   o Eine erste Abrufeinheit, ausgebildet eine erste Bewertungsfunktion des maschinellen Lernalgorithmus abzurufen, wobei die erste Bewertungsfunktion mit ersten Situationsdaten trainiert wurde,
   o Eine zweite Abrufeinheit, ausgebildet zweite Situationsdaten aus einer Produktionsanlage abzurufen, wobei die zweiten Situationsdaten physikalische Messwerte der Produktionsanlage umfassen,
   o eine Recheneinheit, ausgebildet einen epistemischen Unsicherheitswertes zu bestimmen, wobei der epistemische Unsicherheitswert angibt, inwieweit die ersten Situationsdaten die zweiten Situationsdaten abdecken,
   o eine Trainingseinheit, ausgebildet eine zweite Bewertungsfunktion durch ein Trainieren der ersten Bewertungsfunktion mit zumindest einem Teil der zweiten Situationsdaten zu bestimmen, wobei der Teil der zweiten Situationsdaten in Abhängigkeit des epistemischen Unsicherheitswerts in das Trainieren einbezogen wird und
   o eine Ausgabeeinheit, ausgebildet eine Bewertung bezüglich dritter Situationsdaten durch die zweite Bewertungsfunktion auszugeben, wobei die dritten Situationsdaten physikalische Messwerte der Produktionsanlage umfassen, und
- eine Steuereinheit, ausgebildet die Produktionsanlage in Abhängigkeit der Bewertung zu steuern.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: eine schematische Darstellung der Komponenten der Erfindung.

### DETAILLIERTE BESCHREIBUNG DER ERFINDUNG

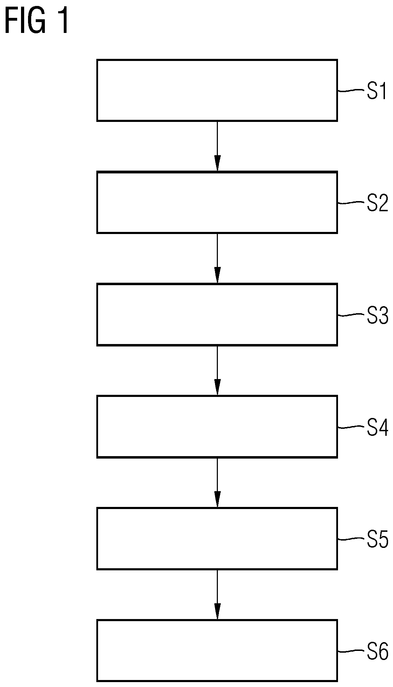

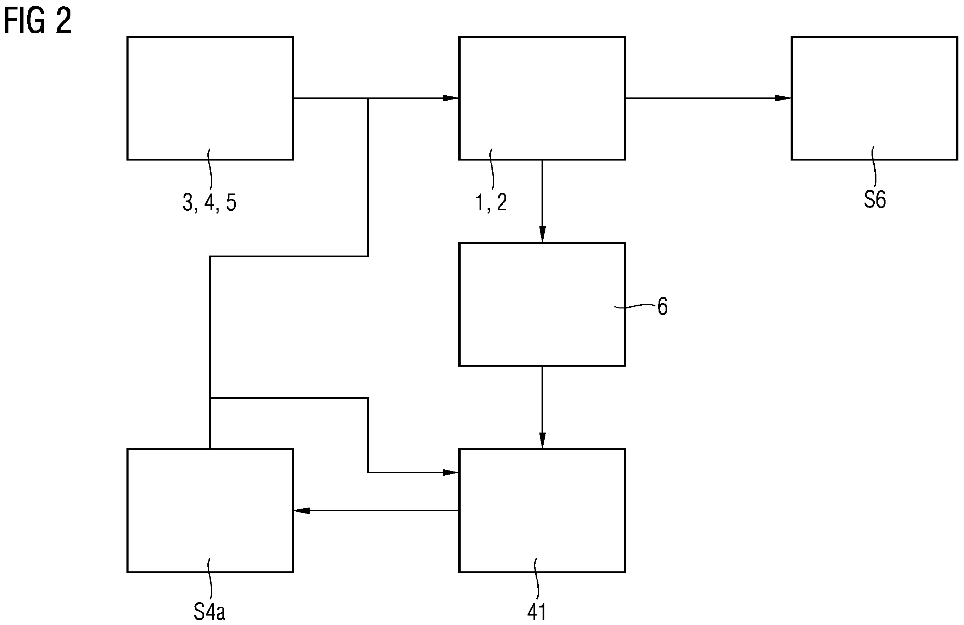

Fig. 1 zeigt ein Ablaufdiagramm des erfindungsgemäßen Verfahrens zum Steuern S6 einer Produktionsanlage in Abhängigkeit einer Bewertung eines maschinellen Lernalgorithmus,
mit den Schritten:
- Schritt S1: Ein Abrufen einer ersten Bewertungsfunktion 1 (dargestellt in Fig. 2) des maschinellen Lernalgorithmus, wobei die erste Bewertungsfunktion 1 mit ersten Situationsdaten 3 (dargestellt in Fig. 2) trainiert wurde,
- Schritt S2: ein Abrufen von zweiten Situationsdaten 4 (dargestellt in Fig. 2) aus einer Produktionsanlage, wobei die zweiten Situationsdaten 4 physikalische Messwerte der Produktionsanlage umfassen,
- Schritt S3: ein Bestimmen eines epistemischen Unsicherheitswertes, wobei der epistemische Unsicherheitswert angibt, inwieweit die ersten Situationsdaten 3 die zweiten Situationsdaten 4 abdecken,
- Schritt S4: ein Erstellen einer zweite Bewertungsfunktion 2 (dargestellt in Fig. 2) durch ein Trainieren S4a (dargestellt in Fig. 2) der ersten Bewertungsfunktion 1 mit zumindest einem Teil 41 (dargestellt in Fig. 2) der zweiten Situationsdaten 4, wobei der Teil 41 der zweiten Situationsdaten 4 in Abhängigkeit des epistemischen Unsicherheitswerts 6 in das Trainieren S4a einbezogen wird,
- Schritt S5: ein Ausgeben einer Bewertung bezüglich dritter Situationsdaten 5 (dargestellt in Fig. 2) durch die zweite Bewertungsfunktion 2, wobei die dritten Situationsdaten 5 physikalische Messwerte der Produktionsanlage umfassen, und
- Schritt S6: das Steuern der Produktionsanlage in Abhängigkeit der Bewertung.

Fig. 2 zeigt eine schematische Darstellung der Komponenten der Erfindung. Die Grundarchitektur des Qualitätsbewertungssystems besteht aus einem oder mehreren Datenerfassungssensoren ausgebildet die ersten Situationsdaten 3, die zweiten Situationsdaten 4 und die dritten Situationsdaten 5 an geeigneter Stelle im Produktionsablauf für die Qualitätsbeurteilung eines Fertigungsschrittes oder eines ganzen Ablaufes zu erfassen.

Diese Sensoren, die in der praktischen Ausführung Kameras, Messsensoren für Größen wie Temperatur oder andere physikalische Größen umfassen, geben ihre Daten an die ersten Bewertungsfunktion 1 und die zweite Bewertungsfunktion 2 weiter, die aufgrund eines zuvor stattgefunden Trainings S4a automatisch entscheidet, ob in der konkreten durch die Sensoren erfassten Situation 3, 4, 5 eine Beanstandung der Produktqualität vorliegt, weil z.B. eine Montage nicht richtig erfolgt ist, Toleranzen oder Fertigungsbedingungen nicht eingehalten wurden.

Liegt eine Beanstandung vor, wird die Fertigungssteuerung von der Bewertungsfunktion darauf hingewiesen S6, die weitere Bearbeitung des Produktes zu unterbrechen S6 und dieses Auszusortieren S6, um entweder eine Behebung vorzunehmen oder es zu verwerfen.

Die Kästen in Fig. 2, dargestellt folgende der erste Bewertungsfunktion 1 und der zweiten Bewertungsfunktion 2, zeigen eine kontinuierliche Anpassung der Bewertungsfunktion. Auf Basis der Situationsdaten 3, 4, 5 erfolgt eine Situationsanalyse unter Einbezug des epistemischen Unsicherheitswerts 6. In Abhängigkeit des epistemischen Unsicherheitswerts 6 wird ein Teil 41 der zweiten Situationsdaten 4 ausgewählt und in den Trainingsdatenpool aufgenommen. Durch ein Training S4a und Testen zusätzlich mit dem Teil 41 der zweiten Situationsdaten 4 erfolgt ein Anpassen S4 der ersten Bewertungsfunktion 1 und dadurch das Erstellen S4 der zweiten Bewertungsfunktion 2.

In Abhängigkeit eines nachfolgenden Testens der zweiten Bewertungsfunktion 2 wird der Teil 41 der zweiten Situationsdaten 4 dauerhaft in den Trainingsdatenpool aufgenommen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Steuern (S6) einer Produktionsanlage in Abhängigkeit einer Bewertung eines maschinellen Lernalgorithmus,
mit den Schritten:
- Ein Abrufen (S1) einer ersten Bewertungsfunktion (1) des maschinellen Lernalgorithmus, wobei die erste Bewertungsfunktion (1) mit ersten Situationsdaten (3) trainiert wurde,
- ein Abrufen (S2) von zweiten Situationsdaten (4) aus einer Produktionsanlage, wobei die zweiten Situationsdaten (4) physikalische Messwerte der Produktionsanlage umfassen,
- ein Bestimmen (S3) eines epistemischen Unsicherheitswertes, wobei der epistemische Unsicherheitswert angibt, inwieweit die ersten Situationsdaten (3) die zweiten Situationsdaten (4) abdecken,
- ein Erstellen (S4) einer zweite Bewertungsfunktion (2) durch ein Trainieren (S4a) der ersten Bewertungsfunktion (1) mit zumindest einem Teil (41) der zweiten Situationsdaten (4), wobei der Teil (41) der zweiten Situationsdaten (4) in Abhängigkeit des epistemischen Unsicherheitswerts (6) in das Trainieren (S4a) einbezogen wird,
- ein Ausgeben (S5) einer Bewertung bezüglich dritter Situationsdaten (5) durch die zweite Bewertungsfunktion (2), wobei die dritten Situationsdaten (5) physikalische Messwerte der Produktionsanlage umfassen, und
- das Steuern (S6) der Produktionsanlage in Abhängigkeit der Bewertung.

2. Verfahren nach Anspruch 1,
mit dem weiteren Schritt:
- Ein Erstellen einer Rangfolge in Abhängigkeit des epistemischen Unsicherheitswerts (6) der zweiten Situationsdaten (4),
wobei bei dem Trainieren (S4a) der ersten Bewertungsfunktion (1) mit zumindest einem Teil (41) der zweiten Situationsdaten (4), der Teil (41) der zweiten Situationsdaten (4) außerdem in Abhängigkeit der Rangfolge in das Trainieren (S4a) einbezogen wird.

3. Verfahren nach Anspruch 2,
wobei das Erstellen der Rangfolge der zweiten Situationsdaten (4) außerdem in Abhängigkeit von:
- einer zuvor von der ersten Bewertungsfunktion (1) getroffenen falsch-positiven Entscheidung und/oder
- einer zuvor von der ersten Bewertungsfunktion (1) getroffenen falsch-negativen Entscheidung
erfolgt.

4. Verfahren nach einem der vorhergehenden Ansprüche,
mit dem weiteren Schritt:
- Ein Abrufen eines Schwellwertes, wobei der Schwellwert eine Schwelle für den epistemischen Unsicherheitswert (6) angibt,
wobei bei dem Trainieren (S4a) der ersten Bewertungsfunktion (1) mit zumindest einem Teil (41) der zweiten Situationsdaten (4), der Teil (41) der zweiten Situationsdaten außerdem in Abhängigkeit der Schwelle in das Trainieren (S4a) einbezogen wird.

5. Verfahren nach einem der vorhergehenden Ansprüche,
wobei das Steuern (S6) der Produktionsanlage:
- Ein Unterbrechen eines Fertigungs- oder Produktionsprozesses und/oder
- ein Durchführen eines weiteren Produktionsschritts und/oder
- ein Weglassen eines weiteren Produktionsschritts und/oder
- ein Warten der Produktionsanlage und/oder
- eine Ausgabe einer Fehlermeldung und/oder
- ein Aussortieren eines Bauteils und/oder
- ein Beheben eines Mangels
umfasst.

6. Verfahren nach einem der vorhergehenden Ansprüche,
wobei die physikalischen Messwerte als:
- Produktionsdaten und/oder
- Temperatur und/oder
- Vibration und/oder
- Feuchtigkeit und/oder
- Bauteilabmessungen und/oder
- Umgebungsbedingungen und/oder
- Fertigungsausschusswerte und/oder
- Bilddaten
ausgebildet sind.

7. Verfahren nach einem der vorhergehenden Ansprüche,
wobei die physikalischen Messwerte durch:
- mindestens einen Messsensor und/oder
- ein Thermometer und/oder
- eine Kamera
erfasst wurden.

8. Verfahren nach einem der vorhergehenden Ansprüche,
wobei die Bewertung durch die zweite Bewertungsfunktion (2):
- eine Fertigungsqualität und/oder
- ein Einhalten eines Toleranzwert
umfasst.

9. Verfahren nach einem der vorhergehenden Ansprüche,
wobei der epistemische Unsicherheitswert (6) durch:
- eine Ensemble-Methode und/oder
- einen Monte-Carlo Dropout
bestimmt wird.

10. Verfahren nach einem der vorhergehenden Ansprüche,
mit den weiteren Schritten:
- ein Ausgeben einer weiteren Bewertung bezüglich der dritten Situationsdaten (5) durch die erste Bewertungsfunktion (1) und
- ein Vergleichen der Bewertung durch die erste Bewertungsfunktion (1) und der weiteren Bewertung durch die zweite Bewertungsfunktion (2) hinsichtlich einer jeweiligen Abweichung von einer grundlegenden Wahrheit.

11. Verfahren nach Anspruch 10,
wobei das Steuern (S6) der Produktionsanlage außerdem in Abhängigkeit der weiteren Bewertung erfolgt.

12. Verfahren nach einem der vorhergehenden Ansprüche,
wobei bei dem Erstellen der zweite Bewertungsfunktion (2) außerdem durch ein Testen mit zumindest einem Teil der zweiten Situationsdaten (3) erfolgt, wobei der Teil der zweiten Situationsdaten (3) in Abhängigkeit des epistemischen Unsicherheitswerts (6) in das Testen einbezogen wird.

13. Produktionssteuerung, ausgebildet zum Steuern einer Produktionsanlage in Abhängigkeit einer Bewertung eines maschinellen Lernalgorithmus,
aufweisend:
- einen Prozessor, aufweisend:
- eine erste Abrufeinheit, ausgebildet eine erste Bewertungsfunktion des maschinellen Lernalgorithmus abzurufen, wobei die erste Bewertungsfunktion (1) mit ersten Situationsdaten (3) trainiert wurde,
- eine zweite Abrufeinheit, ausgebildet zweite Situationsdaten (4) aus einer Produktionsanlage abzurufen, wobei die zweiten Situationsdaten (4) physikalische Messwerte der Produktionsanlage umfassen,
- eine Recheneinheit, ausgebildet einen epistemischen Unsicherheitswertes (6) zu bestimmen, wobei der epistemische Unsicherheitswert (6) angibt, inwieweit die ersten Situationsdaten (3) die zweiten Situationsdaten (4) abdecken,
- eine Trainingseinheit, ausgebildet eine zweite Bewertungsfunktion (2) durch ein Trainieren (S4a) der ersten Bewertungsfunktion (1) mit zumindest einem Teil der zweiten Situationsdaten (4) zu bestimmen, wobei der Teil (41) der zweiten Situationsdaten (4) in Abhängigkeit des epistemischen Unsicherheitswerts (6) in das Trainieren (S4a) einbezogen wird und
- eine Ausgabeeinheit, ausgebildet eine Bewertung bezüglich dritter Situationsdaten (5) durch die zweite Bewertungsfunktion (2) auszugeben, wobei die dritten Situationsdaten (5) physikalische Messwerte der Produktionsanlage umfassen, und
- eine Steuereinheit, ausgebildet die Produktionsanlage in Abhängigkeit der Bewertung zu steuern.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
